Europäisches Patentamt

European Patent Office

Office européen des brevets

(11) Publication number: **0 243 752**
**A2**

## (12) EUROPEAN PATENT APPLICATION

(21) Application number: **87105244.5**

(22) Date of filing: **09.04.87**

(51) Int. Cl.⁴: **C08F 2/00** , C08F 6/24

(30) Priority: **11.04.86 US 850782**

(43) Date of publication of application:
**04.11.87 Bulletin 87/45**

(84) Designated Contracting States:
**BE CH DE ES FR GB GR IT LI NL SE**

(71) Applicant: **The B.F. GOODRICH Company**
**Dept. 0015 WHB-6 500 South Main Street**
**Akron, Ohio 44318(US)**

(72) Inventor: **Daniels, Charles Anthony**
**242 Sunset**
**Avon Lake Ohio 44012(US)**
Inventor: **Fattlar, Joseph Edward**
**27412 Dellwood Drive**
**Westlake Ohio 44145(US)**
Inventor: **Gardner, Keith Leslie**
**31651 Avon Road** ·
**Avon Ohio 44011(US)**

(74) Representative: **von Kreisler, Alek,**
**Dipl.-Chem. et al**
**Deichmannhaus am Hauptbahnhof**
**D-5000 Köln 1(DE)**

(54) **Free draining polymerization process vessels.**

(57) Aqueous polymerization process vessels are made free draining by adding, after the polymerization, an effective amount of a wetting agent. Polyvinyl chloride reactors, blow down tanks and stripping columns produce improved quality products as a result of less fouling from particles which attach to the internal surfaces of the vessels.

EP 0 243 752 A2

## FREE DRAINING POLYMERIZATION PROCESS VESSELS

BACKGROUND OF THE INVENTION

Vinyl polymers such as polyvinyl chloride (PVC) are normally produced in large reactor vessels. The predominant process used is an aqueous suspension process. Upon the completion of the aqueous suspension polymerization process, the reactor vessel is drained and the contents, which is a slurry of PVC in water, is transferred to a blow-down vessel and then to a stripping column. In the stripping column the residual monomer is stripped from the polymer, usually by a countercurrent steam process, whereby the PVC slurry enters near the top of the column and steam enters near the bottom of the column. The steam travels upward usually through sieve plates and extracts the residual unreacted monomer from the polymer. The steam with the monomer exits the column near the top, while the polymer particles exit near the bottom of the column.

During any of these operations, draining of the reactor vessel, draining the blow-down vessel, or as the slurry is passing through the stripping column, particles of polymer can become attached to the vessel or column walls and remain there for a long period of time. The process equipment is maintained at an elevated temperature, thus subjecting the particles clinging to the walls to substantial heat history.

When polymers such as PVC are subjected to excess heat they turn from a white color to amber to brown to black. These dark colored particles often become detached from the walls during subsequent run batches and become mixed with top grade resin. This is a serious source of contamination in the manufacture of PVC resins.

These undesirable resin particles which have been subjected to excess heat can also become polymerized to an excessively high molecular weight and have little or no porosity. This leads to a quality problem in several products such as flexible film where these hard, non-porous particles show up as defects in the film, often referred to as "fish-eyes".

Another phenomena which compounds this severe problem, occurs when certain dispersants are used in the polymerization. Dispersants which create a hydrophobic region on the resin particle surface makes the resin want to float on the surface of the slurry. This is particularly bad in the stripping column. If the resin particles float, they will be in the column for longer periods of time and have a greater likelihood of sticking to the walls of the column. This "floating particle" phenomena is observed mostly in a thickened aqueous suspension polymerization process as taught by U.S. Patent 4,435,524, incorporated herein by reference, where spherical resin particles are formed.

Several solutions to this troublesome problem have been suggested in the past. One solution is to high pressure rinse or clean the reactor vessel after each polymerization. This of course is time consuming and hinders productivity. Also other process equipment such as stripping columns are normally run on a continuous basis and cleaning after each batch is stripped would be impractical, if not impossible.

A simple and practical solution to this long standing problem is desirable.

SUMMARY OF THE INVENTION

It is an objective of this invention to provide aqueous polymerization and process vessels which will drain free of polymer particles.

It is a further object of this invention to reduce the amount of dark resin contamination and overpolymerized resin contamination in making vinyl polymers, thus reducing "fish-eyes" in the final product.

It is another object of this invention to reduce the fouling in stripping columns used to strip residual vinyl chloride monomer from polyvinyl chloride resins.

These and other objects which will become evident from the disclosure described below are accomplished by this invention.

An improved process for producing polymers comprising polymerizing at least one monomer in an aqueous medium in the presence of a catalyst and a dispersant thereby obtaining an aqueous slurry of polymer particles, passing said slurry to a stripping vessel whereby a substantial portion of the unreacted monomer is stripped from the polymer particles, wherein the improvement comprises adding to said slurry, after polymerization, an effective amount of at least one wetting agent. The adding of the wetting agent allows the slurry to freely drain from the vessels thereby solving the problem of particles sticking to the walls of the vessels and becoming contamination in subsequent batches.

## DETAILED DESCRIPTION

This invention is applicable to any polymers which are polymerized in an aqueous medium and where the resultant polymer is an aqueous slurry of polymer particles. Examples of polymers formed in an aqueous slurry are ethylene vinyl acetate emulsion copolymers, vinyl acetate polymers, acrylonitrile polymers, vinyl chloride polymers, vinylidene chloride polymers, styrene butadiene emulsion polymers, butadiene emulsion polymers, acrylonitrile butadiene styrene emulsion polymers, styrene suspension polymers, methyl methacrylate suspension polymers and butadiene acrylic acid emulsion polymers. For simplicity of description the invention will be described in connection with the aqueous suspension polymerization of vinyl chloride to form polyvinyl chloride resin.

Polyvinyl chloride resin as used in this specification means polyvinyl chloride homopolymers as well as vinyl chloride polymerized with up to 50%, preferably up to 20%, by weight of one or more other vinylidene monomers having at least one terminal $CH_2 = C <$ grouping. Suitable comonomers that may be polymerized with vinyl chloride are esters of acrylic acid, for example, methyl acrylate, ethyl acrylate, butyl acrylate, octyl acrylate, cyanoethyl acrylate, and the like; vinyl acetate; esters of methacrylic acid, such as methyl methacrylate, ethyl methacrylate, butyl methacrylate, and the like; styrene and styrene derivatives including $\alpha$-methyl styrene, vinyl toluene, chlorostyrene; vinyl naphthalene; diolefins including butadiene, isoprene, chloroprene, and the like; nitriles, such as acrylonitrile, methacrylonitrile, etc; acrylamides, such as methyl acrylamide, N-methylol acrylamide, N-butoxy methacrylamide, and the like; vinyl ethers, such as ethyl vinyl ether, chloroethyl vinyl ether, and the like; the vinyl ketones, such as methyl vinyl ketone, etc.; vinyl napthalene; allyl and vinyl chloroacetate;vinyl pyridine; esters of maleic and fumaric acid, and the like; and mixtures of any of these types of monomers and other vinylidene monomers copolymerizable therewith; and other vinylidene monomers of the types known to those skilled in the art. The amount of comonomer that can be polymerized with vinyl chloride is a function of the choice of comonomer, as is well understood by those skilled in the art. Preferably, the polyvinyl chloride polymers of this invention are polyvinyl chloride homopolymers.

One suitable method of preparing the novel resin of this invention is according to a suspension polymerization process such as is disclosed in U.S. Patent 4,435,524, which is incorporated herein by reference.

The process of U.S. Patent 4,435,524 embodies a suspension polymerization procedure wherein the reaction medium is stirred rapidly during the entire reaction period. With the proper choice of dispersants and surfactants, there is produced spherical, porous particles of polymer having low amounts of glassy content and having high bulk density. In the process, water is the polymerization medium and a vinyl monomer to water ratio in the range of about l.0 to l0.0 is satisfactory. Preferably a ratio in the range of about l.0 to 4.0 is employed.

The catalysts that may be used in the polymerization process of this invention are the alkanoyl, aroyl, alkaraoyl, and aralkanoyl diperoxides and monohydroperoxides, azo compounds, peroxy esters, percarbonates, and other free radical type catalysts. As examples of such catalysts, there may be named benzoyl peroxide, lauryl peroxide, diacetyl peroxide, cumene hydroperoxides, methyl ethyl ketone peroxide diisopropylbenzene hydroperoxide, 2,4-dichlorobenzoyl peroxide, naphthoyl peroxide, t-butyl perbenzoate, di-t-butyl perphthalate, isopropyl percarbonate, acetyl cyclohexane sulfonyl peroxide, disecondary butyl peroxydicarbonate, 5-butyl peroxyneodecanoate, di-normal propyl peroxydicarbonate, azo-bis isobutyronitrile, $\alpha,\alpha'$-azodiisobutyrate, 2,2'-azobis-(2,4-dimethyl valeronitrile), and many others. The particular free radical catalyst employed will depend upon the monomeric material(s) being polymerized, the molecular weight and color requirements of the polymer, the temperature of polymerization, etc. Insofar as the amount of catalyst employed is concerned, it has been found that an amount in the range of about 0.005 parts by weight to about l.00 parts by weight, based on l00 parts by weight of the monomer or monomers being polymerized, is satisfactory. However, it is preferred to employ an amount of catalyst in the range of about 0.0l part by weight to about 0.20 part by weight based on l00 parts by weight of monomer-(s).

When polymerizing vinyl monomers by the suspension polymerization technique, it is advantageous to add to the liquid reaction medium a small amount of a dispersant. The purpose of the dispersant is to obtain a more complete and uniform dispersal of the monomer(s) and catalyst(s) throughout the reaction medium prior to and during the polymerization of the monomer(s). Any of the well known dispersants operative in aqueous media may be employed. These include, among others, methyl cellulose, hydroxypropyl methyl cellulose, polyvinyl alcohol, dodecylamine hydrochloride, sodium lauryl sulfonate, lauryl alcohol, sorbitan monolaurate polyoxyethylene, nonylphenoxy polyoxyethylene ethanol, hydrolyzed polyvinyl acetates, etc. The amount of dispersant employed will be in the range of about 0.01% to about 1.0% by weight, based on the weight of the monomer(s), to give satisfactory results. Preferably, however, the dispersant is employed in the range of about 0.02% to about 0.10% by weight. The monomer droplets are formed and are coated or surrounded by the dispersant. The coating of dispersant becomes a party of the resin particles in the finished product. The dispersants are added at or before polymerization begins.

The suspension polymerization process to produce resin may be carried out at any temperature which is normal for the monomeric material to be polymerized. Preferably, a temperature in the range of about 25°C to about 100°C is employed. In order to facilitate temperature control during the polymerization process, the reaction medium is kept in contact with cooling surfaces cooled by water, brine, evaporation, etc. This is accomplished by employing a jacketed polymerization reactor wherein the cooling materials are circulated through the jacket throughout the polymerization reaction. This cooling is necessary since most all of the polymerization reactions are exothermic in nature. It is understood, of course, that a heating medium can be circulated through the jacket, if necessary.

In the polymerization of vinyl chloride the aqueous polymerization mixture is agitated throughout the reaction.

Various means can be employed to get and maintain the proper agitation and shearing action. The reaction vessel or polymerizer is made of stainless steel or glass lined and fitted with a heating and cooling jacket and having a rotatable shaft mounted centrally thereof. On said shaft are mounted one or more agitator blades, which may be flat or curved. Further, one or more baffles may be employed which are mounted on the inner wall of the reactor or adjacent thereto. The baffles give an up-and-down, or pumping action to the reaction medium in addition to the circular motion thereof created by the agitator blades.

The suspension polymerization process may be carried out at autogenous pressures although superatmospheric pressures of up to 10 atmospheres or more may be employed with some advantage with the more volatile monomers. Superatmospheric pressures may also be employed with those monomers having the requisite volatilities at reaction temperatures permitting reflux cooling of the reaction mixture.

Normally, the polymer particles formed by the suspension polymerization of vinyl chloride have an average diameter by weight between about 70 microns and 1000 microns. Preferably, for most end uses, the polymer particles will have a diameter in the range of about 100 microns to about 300 microns.

Upon the completion of the polymerization, the aqueous slurry of polyvinyl chloride is transferred to a blow-down tank where the slurry is held until it is fed to a stripping column. The stripping column process normally used to remove unreacted vinyl chloride monomer from PVC is a counter current stripping operation whereby the PVC polymer particles are contacted with steam at a temperature of from about 65°C to about 135°C for about 10 seconds to about 30 minutes or more and at a pressure of from about 4 psi to about 40 psi and above. The unreacted monomer is carried away by the steam. The stripping column has a plurality of sieve trays to create a desired residence time for the resin in the column.

After stripping, the polymer particles are dried and recovered in a dry free flowing powder form and are suitable for end use applications such as calendering, extruding, molding and the like, to form a multitude of PVC products which are all well known in the art.

The above process described heretofore in the Detailed Description is known in the art. A serious problem which occurs with the process as known before this invention is that as the reactor vessel is being drained of polymer slurry, some of the polymer particles in the aqueous slurry will adhere to the internal surfaces of the reactor vessel as, the aqueous layer recedes. This is a similar phenomenon as draining bath water from a bath tub and having suspended dirt particles stick to the side of the tub creating what is commonly known as "ring around the tub". If these polymer particles remain in the reactor they will be subjected to at least one additional polymerization cycle. Subjecting the particles to further polymerization increases the polymer molecular weight; destroys porosity and thus. its ability to absorb plasticizer; results in overpolymerization where fresh monomer is polymerized over the particle from the previous polymerization; and increases the heat history of the polymer resulting in stability problems. All of these are detrimental to end product quality. The result is "fish-eyes" in the final product, lower impact and tear strength, and dark resin specks, which are noticeable in many clear or light colored products.

This problem of polymer particles sticking to the internal surfaces of the vessels also occurs in the blow down vessel and stripping column as well as the reactor vessel. The stripping column also has more unique problems associated with polymer particles sticking to the internal surfaces. Since the stripping column is normally operated at a higher temperature than the polymerization reactor vessel or blow down tank, the polymer can become discolored very quickly. Also the stripping column is operated on a continuous basis making cleaning the internal surfaces a major operational problem. The polymer particles stick to the internal surfaces of the stripping column as a result of the slurry on the sieve trays splashing up onto the walls and as a result of flow rate changes or surges through the column which cause the level on the sieve trays to rise and fall.

The problem in the stripping column is further complicated when processing a spherical resin particle such as those produced by U.S. Patent 4,435,524. A large portion of these spherical polymer particles float on the surface of the aqueous medium even through their density is greater than water. It is believed this occurs because of the particular types of dispersants used which create a hydrophobic region on the surface of the particles thus making them want to stick to the vapor interface to get away from the water layer.

It has been unexpectably found that by adding an effective amount of at least one wetting agent to the aqueous polymer slurry after polymerization is essentially complete, the vessels will drain freely. This free draining allows the polymer particles to be carried out of the vessel with the aqueous medium and the particles do not become attached to walls of the reactor vessel, blow down tank or stripping column. This greatly reduces contamination in subsequent run batches.

Suitable wetting agents include cationic, anionic and nonionic wetting agents. Particular desirable wetting agents include nonylphenoxypoly (ethyleneoxy) ethanol wetting agents sold uner the trademark of IGEPAL®, polyoxypropylene-polyoxyethylene block copolymers sold under the trademark of PLURONIC® and ethoxylated derivatives of acetylenic alcohols or glycols such as those sold under the trademark of SURFYNOL®. Blends of more than one wetting agent may also be used.

The amount of wetting agent used is, of course, dependent on the type and amount of polymer particles in the aqueous slurry. The amount used is such that the surface tension of the aqueous surface is reduced to an extent that the polymer particles will be wetted by the aqueous medium and not stick to the internal surfaces of the vessel. In the case of polymer particles which float, the amount of wetting agent used is that which is sufficient to cause the polymer particles to sink.

Preferably the level of wetting agent used is from about 0.05 part by weight to about 0.5 part by weight per 100 parts by weight of polymer particles in the slurry. More preferably the amount is from about 0.075 parts by weight to about 0.125 parts by weight per 100 parts by weight of polymer particles in the slurry. Greater amounts can be used, but the use of more than is needed would not be economically justified.

It is important that the wetting agent be added to the aqueous slurry after the polymerization is substantially completed. Otherwise, the wetting agent will be less effective. The wetting agent can be added to the slurry in the polymerization vessel, blow-down tank, or at the entrance to the stripping column. It is necessary that the wetting agent be present in the slurry when the resin is stripped of residual monomer. Preferably the wetting agent is added to the polymerization vessel containing the slurry.

To further illustrate the present invention, the following specific examples are given, it being understood that this is merely intended in an illustrative and not a limitative sense. In the examples all parts are by weight unless otherwise indicated.

## EXAMPLES

Examples I to V are presented to show that as the amount of wetting agent is increased, there is less tendency for polymer particles to stick to the sides of the stripping column and for the particles to float. A slurry of polyvinyl chloride resin particles, which had been produced by a thickened aqueous suspension process as taught in U.S. Patent 4,435,524, was fed to a counter current steam stripping column. The PVC slurry was 21% solids. The stripping column was a 6 inch diameter, 8 tray column. The slurry was fed to the top of the column at a rate of 309 pounds/hr. Steam was fed to the bottom of the column at a rate of 51.6 pounds/hr. Stripped resin substantially free of residual monomer was taken from the bottom of the column while steam carrying the residual monomer was taken from the top of the column. When wetting agent was used according to this invention, it was metered into the top of the stripping column.

## EXAMPLE I

This example is presented as a control with no wetting agent present. As the column was operated, it was observed that the resin particles would stick to the walls of the column and there was also a large layer of floating particles in the column bottoms.

This type of condition leads to the resin stuck to the walls being overheated and becoming dark. Eventually the column must be shut down and cleaned to get rid of the contaminated dark resin.

## EXAMPLE II

In this example, 0.031 part by weight of nonylphenoxypoly(ethyleneoxy)ethanol wetting agent per 100 parts by weight of resin was metered into the top of the stripping column. As the column was operated, it was observed that significant amounts of resin began accumulating on about half of the trays. Also, a layer of floating resin appeared in the column bottom.

This example shows that with this particular wetting agent, a level of 0.031 parts by weight was not enough to solve the problem, which existed with the control.

## EXAMPLE III

In this example, 0.051 part by weight of nonylphenoxypoly(ethyleneoxy)ethanol wetting agent per 100 parts by weight of resin was metered into the top of the stripping column. As the column was operated, it was observed that resin was sticking to the sides of the column. There was no layer of floating resin in the column bottom.

This example shows that a level of 0.051 part by weight of wetting agent gives results which are improved over 0.031 part level.

## EXAMPLE IV

In this example, 0.091 part by weight of nonylphenoxypoly(ethyleneoxy)ethanol wetting agent was metered into the top of the stripping column. As the column was operated, it was observed that some resin was sticking to the sides of the column. There was no layer of floating resin in the column bottom.

This example shows that as the level of wetting agent increases, the column runs cleaner.

## EXAMPLE V

In this example, 0.173 part by weight of nonylphenoxypoly(ethyleneoxy)ethanol wetting agent was metered into the top of the stripping column. As the column operated, the column stayed clean of resin and there was no floating resin observed.

With the particular wetting agent used in Examples II through V, it was determined that a level greater than 0.091 part should be used and that a level of 0.173 allowed the column to run very well. Different wetting agents will require slightly different levels for optimum results.

The wetting agent can be metered into the stripping column or added to the slurry any time after the polymerization is substantially complete. If the wetting agent is added to the slurry in the polymerization vessel or blowdown tank, then the added benefit of making these vessels free draining is obtained.

## Claims

1. An improved process for producing polymers comprising polymerizing at least one monomer in an aqueous medium in the presence of at least one catalyst and at least one dispersant to obtain an aqueous slurry of polymer particles, wherein the improvement comprises adding to said slurry, after the polymerization is substantially complete, an effective amount of at least one wetting agent.

2. A process of claim 1 wherein said wetting agent is added after polymerization but before the polymer particles are stripped of residual monomer.

3. A process of claim 2 wherein said polymer particles are vinyl polymer particles.

4. A process of claim 3 wherein said vinyl polymer is polyvinyl chloride polymer.

5. A process of claim 4 wherein said wetting agent is selected from the group consisting of nonylphenoxy poly(ethyleneoxy) ethanol,polyoxypropyene-polyoxyethylene block copolymers, ethoxylated derivatives of acetylenic alcohols, and ethoxylated derivatives of glycols.

6. A process of claim 5 wherein the amount of said wetting agent used is from about 0.05 part by weight to about 0.5 part by weight per 100 parts by weight of polymer particles.

7. A process of claim 6 wherein the amount of said wetting agent used is from about 0.075 part by weight to about 0.125 part by weight per 100 parts by weight of polymer particles.

8. A improved process for removing residual vinyl chloride monomer from a polyvinyl chloride polymer comprising contacting polyvinyl chloride polymer in the form of a slurry of particles in water with steam in a countercurrent operation at a temperature of from about 150°F to about 270°F, the improvement comprising adding to the feed slurry of polyvinyl chloride particles an effective amount of at least one wetting agent.

9. A process of claim 8 wherein the polyvinyl chloride polymer is a polymer prepared by polymerizing vinyl chloride with up to 50 percent by weight of at least one other copolymerizable monomer.

10. A process of claim 8 wherein the polyvinyl chloride polymer is a polyvinyl chloride homopolymer.

11. A process of claim 10 wherein the polyvinyl chloride homopolymer has a particle size of from about 100 microns to about 300 microns.

12. A process of claim 8 wherein said wetting agent is selected from the group consisting of nonylphenoxy poly(ethyleneoxy) ethanol,polyoxypropyene-polyoxyethylene block copolymers, ethoxylated derivatives of acetylenic alcohols, and ethoxylated derivatives of glycols.

13. A process of claim 12 wherein the amount of said wetting agent used is from about 0.05 part by weight to about 0.5 part by weight per 100 parts by weight of polymer particles.

14. A process of claim 13 wherein the amount of said wetting agent used is from about 0.075 part by weight to about 0.125 part by weight per 100 parts by weight of polymer particles.

15. A process of claim 8 wherein said polyvinyl chloride particles were produced in a thickened aqueous medium.